# EUROPÄISCHE PATENTSCHRIFT

(11) **EP 2 673 520 B1**
(45) Veröffentlichungstag und Bekanntmachung des Hinweises auf die Patenterteilung: **15.04.2015**
(21) Anmeldenummer: 12703779.4
(22) Anmeldetag: 07.02.2012
(51) Int. Cl.: F16D 13/62

(54) **ELASTISCHE WELLENKUPPLUNG UND ELASTOMERSEGMENT**
ELASTIC SHAFT COUPLING AND ELASTOMER SEGMENT
ACCOUPLEMENT ELASTIQUE D'ARBRES ET SEGMENT ELASTOMÈRE

(30) Priorität: 08.02.2011 DE 102011003757
(43) Veröffentlichungstag der Anmeldung: 18.12.2013
(73) Patentinhaber: GKN Stromag Aktiengesellschaft, 59425 Unna (DE)
(72) Erfinder: KAMPS, Thomas, 59439 Holzwickede (DE); FERDERER, Juri, 59199 Bönen (DE)
(74) Vertreter: Patentanwälte Ruff, Wilhelm, Beier, Dauster & Partner
(86) Internationale Anmeldenummer: PCT/EP2012/052049
(87) Internationale Veröffentlichungsnummer: WO 2012/107444

(56) Entgegenhaltungen:
- EP-A1- 0 134 829
- EP-A1- 0 534 899
- DE-A1- 3 243 640
- DE-A1-102006 012 954
- DE-A1-102007 050 360
- DE-C1- 3 843 496
- DE-U1- 29 921 177
- DE-U1-202009 011 932
- GB-A- 754 577
- GB-A- 1 244 747
- GB-A- 1 603 188

## Beschreibung

Die erfindungsgemäße Lösung betrifft eine elastische Wellenkupplung zur Drehmomentübertragung mit einer relativ zu einer Kupplungsdrehachse radial innenseitigen Kupplungsnabe, die einer ersten Kupplungsseite zugeordnet ist, sowie mit einer radial außenliegenden zweiten Kupplungsseite, wobei die Kupplungsnabe mit der zweiten Kupplungsseite über mehrere Elastomersegmente drehmomentübertragend verbunden ist, die jeweils über eine zentrale Befestigungsanordnung mit der Kupplungsnabe und über zwei in Umfangsrichtung beabstandete seitliche Befestigungsanordnungen mit der zweiten Kupplungsseite verbunden sind, sowie ein Elastomersegment für eine derartige elastische Wellenkupplung.

Eine derartige elastische Wellenkupplung ist aus der DE 20 2009 011 932 U1 bekannt. Die bekannte elastische Wellenkupplung weist eine radial innenliegende Kupplungsnabe auf, die einer ersten Kupplungsseite zugeordnet ist. Radial außenliegend ist ein einer zweiten Kupplungsseite zugeordneter Ringflansch vorgesehen, der in radialem Abstand zu der Kupplungsnabe, aber koaxial zu einer gemeinsamen Kupplungsdrehachse ausgerichtet ist. Zur Drehmomentübertragung zwischen der ersten und der zweiten Kupplungsseite sind mehrere über den Umfang der Kupplung verteilt angeordnete Elastomersegmente vorgesehen, die über eine zentrale Befestigungsanordnung mit der innenliegenden Kupplungsnabe und über die zentrale Befestigungsanordnung in Umfangsrichtung beidseitig flankierende seitliche Befestigungsanordnungen mit dem Ringflansch verbunden sind. Im Kupplungsbetrieb werden die Elastomersegmente auf Zug und Druck sowie auf Schub beansprucht. Dabei deformieren sie sich elastisch. Die Elastomersegmente sind aus einem Elastomer, wie insbesondere Natur- oder Synthetikkautschuk, hergestellt und können ergänzend mit Metall- oder Gewebeeinlagen versehen sein. Die Elastomersegmente sind mit schlitzförmigen Hohlräumen versehen.

Aufgabe der Erfindung ist es, eine elastische Wellenkupplung und ein Elastomersegment der eingangs genannten Art zu schaffen, die eine weiter verbesserte Drehmomentübertragung und eine lange Lebensdauer ermöglichen.

Diese Aufgabe wird dadurch gelöst, dass jedes Elastomersegment einen zentralen Metallkörper sowie zwei seitliche Metallkörper aufweist, in denen die Befestigungsanordnungen integriert sind, und dass jeder seitliche Metallkörper mit dem zentralen Metallkörper über jeweils einen Elastomervollkörper verbunden ist, der an beiden Metallkörpern anvulkanisiert ist. Die erfindungsgemäße Lösung eignet sich für elastische Wellenkupplungen zur Drehmomentübertragung, insbesondere in einem Antriebsstrang einer Industriemaschine oder eines Fahrzeuges zu Lande oder zu Wasser. Die Elastomersegmente der erfindungsgemäßen Lösung werden in beiden Drehrichtungen während des Kupplungsbetriebes auf Schub beansprucht. Ergänzend kann eine Zug- oder Druckbelastung überlagert sein. Alle Elastomersegmente sind vorzugsweise in einer gemeinsamen Radialebene - auf die Kupplungsdrehachse bezogen - angeordnet. Unter einem Elastomervollkörper im Sinne der Erfindung ist ein Elastomerkörper zu verstehen, der als gemeinsame Einheit auf Zug, Druck und Schub beansprucht wird. Mechanisch gesehen bildet der Elastomervollkörper einen einzigen Strang, der auf Zug oder Druck sowie Schub beansprucht wird. Der Elastomervollkörper kann mit wenigstens einem Belüftungskanal versehen sein, um seine Erwärmung zu reduzieren.

In Ausgestaltung der Erfindung weist jeder Elastomervollkörper an seinem Außenumfang wenigstens einen einstückig angeformten Höcker auf, der nach außen abragt. Der wenigstens eine Höcker ist auf Höhe eines im Kupplungsbetrieb besonders beanspruchten Bereiches des Elastomervollkörpers vorgesehen. Die Lage, Gestaltung und Anordnung des Höckers wird durch eine Finite-Elemente-Methode ermittelt, wobei rechnerisch der Elastomervollkörper mit den Zug-, Druck- und Schubbelastungen beansprucht wird, die im späteren Kupplungsbetrieb auftreten. An besonders hoch beanspruchten Stellen des Körpers wird der wenigstens eine Höcker vorgesehen, um den Elastomervollkörper zu verdicken und demzufolge zu verstärken. Jeder Elastomervollkörper ist vorzugsweise aus einem Naturkautschuk oder einem Synthetikkautschuk wie Silikon oder ähnlichem hergestellt.

In weiterer Ausgestaltung der Erfindung ist jeder Elastomervollkörper flächig über seine gesamte Stirnfläche an dem jeweiligen Metallkörper anvulkanisiert. Dadurch ist eine besonders sichere und feste Verbindung zwischen jedem Elastomervollkörper und den zugeordneten Metallkörpern gewährleistet.

In weiterer Ausgestaltung der Erfindung ist jeder Metallkörper an wenigstens einer einem Elastomervollkörper zugewandten Seitenfläche mit wenigstens einer Auswölbung versehen, die der Elastomervollkörper umschließt. Hierdurch wird die Oberfläche der Seitenfläche des Metallkörpers vergrößert, die auch die Anvulkanisationsfläche für den Elastomervollkörper darstellt. So wird eine verbesserte Verbindung des Elastomervollkörpers mit den beiden Metallkörpern geschaffen.

In weiterer Ausgestaltung der Erfindung sind Randbereiche jedes Elastomervollkörpers unter Bildung von Radien an den entsprechenden Metallkörper anvulkanisiert. Dadurch werden Kerbwirkungen am Übergangsbereich zwischen Elastomervollkörper und den Metallkörpern reduziert.

In weiterer Ausgestaltung der Erfindung weist die Kupplungsnabe radial nach außen abragende Befestigungsfortsätze zur Verbindung mit den zentralen Metallkörpern der Elastomersegmente auf. Die zweite Kupplungsseite weist einen radialen Ringflansch auf, an dem die seitlichen Metallkörper der Elastomersegmente gelagert sind. In vorteilhafter Weise ist ein Außendurchmesser der Kupplungsnabe im Bereich der Befestigungsfortsätze kleiner als ein Innendurchmesser des Ringflansches der zweiten Kupplungsseite. Dadurch kann bei Überlastung der Wellenkupplung eine Metallberührung zwischen erster und zweiter Kupplungsseite vermieden werden. Denn durch die beschriebene Ausgestaltung können die Kupplungsnabe und der Ringflansch sich koaxial relativ zueinander über 360° verdrehen, ohne miteinander in Berührung zu gelangen. Eine entsprechende Verdrehung wird im normalen Betriebsfall allerdings durch die montierten Elastomersegmente verhindert, die die drehmomentübertragende Verbindung zwischen der ersten und der zweiten Kupplungsseite herstellen.

Für das Elastomersegment wird die der Erfindung zugrundeliegende Aufgabe dadurch gelöst, dass das Elastomersegment einen zentralen Metallkörper sowie zwei seitliche Metallkörper aufweist, in denen die Befestigungsanordnungen integriert sind, und dass jeder seitliche Metallkörper mit dem zentralen Metallkörper über jeweils einen Elastomervollkörper verbunden ist, der an dem seitlichen Metallkörper und dem zentralen Metallkörper anvulkanisiert ist. Derartige Elastomersegmente können als Ersatzteile für eine erfindungsgemäße elastische Wellenkupplung eingesetzt und selbstständig vertrieben werden.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer Frontansicht eine Ausführungsform einer erfindungsgemäßen elastischen Wellenkupplung,
- Fig. 2: die Wellenkupplung nach Fig. 1 in perspektivischer Darstellung,
- Fig. 3: die Wellenkupplung nach Fig. 2 unter Weglassung eines äußeren Ringflansches einer zweiten Kupplungsseite,
- Fig. 4a: in perspektivischer Darstellung ein Elastomersegment der Wellenkupplung nach den Fig. 1 bis 3,
- Fig. 4b: in vergrößerter Frontansicht das Elastomersegment nach Fig. 4a,
- Fig. 4c: eine Draufsicht auf das Elastomersegment nach Fig. 4b,
- Fig. 5a: in einer Frontansicht eine weitere Ausführungsform eines Elastomersegmentes ähnlich den Fig. 4a bis 4c, ebenfalls für eine elastische Wellenkupplung nach den Fig. 1 bis 3,
- Fig. 5b: eine Draufsicht auf das Elastomersegment nach Fig. 5a,
- Fig. 5c: in vergrößerter Darstellung einen Ausschnitt I des Elastomersegmentes nach Fig. 5b,
- Fig. 5d: in vergrößerter Darstellung einen Ausschnitt II des Elastomersegmentes nach Fig. 5b,
- Fig. 6a: in einer Frontansicht eine weitere Ausführungsform eines Elastomersegmentes ähnlich den Elastomersegmenten nach den Fig. 4a und 5a,
- Fig. 6b: eine Draufsicht auf das Elastomersegment nach Fig. 6a,
- Fig. 6c: in vergrößerter Darstellung einen Ausschnitt III des Elastomersegmentes nach Fig. 6b und
- Fig. 6d: in vergrößerter Darstellung einen Ausschnitt IV des Elastomersegmentes nach Fig. 6b.

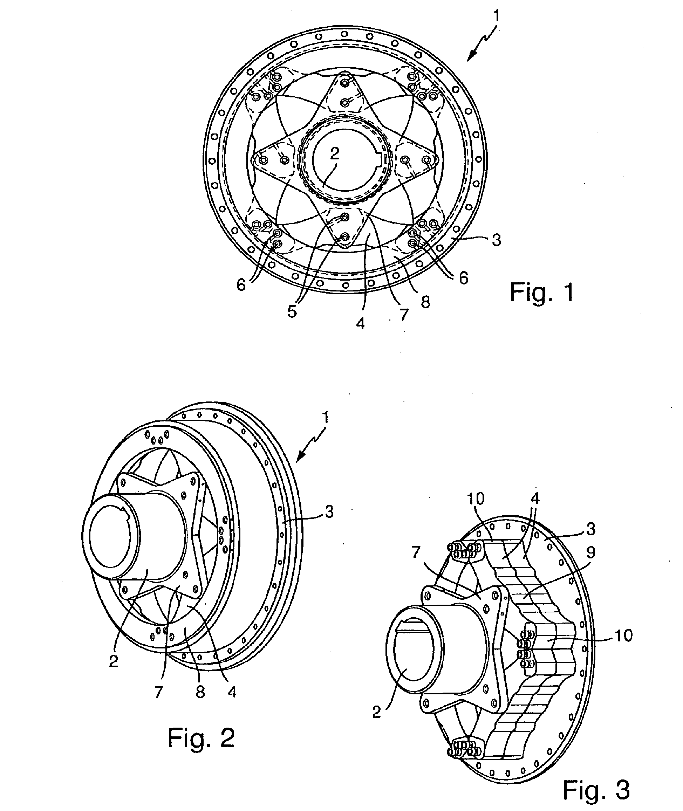

Eine elastische Wellenkupplung 1 nach den Fig. 1 bis 3 dient zur Drehmomentübertragung innerhalb eines Antriebsstranges einer Industriemaschine oder eines Fahrzeuges zu Wasser oder zu Lande. Die Wellenkupplung 1 weist eine erste Kupplungsseite auf, die eine Kupplungsnabe 2 umfasst. Eine Mittellängsachse der Kupplungsnabe 2 bildet eine Kupplungsdrehachse. Koaxial zu der Kupplungsnabe 2 ist eine zweite Kupplungsseite 3 vorgesehen, die einen die Kupplungsnabe 2 radial außen umgebenden Ringflansch 8 umfasst. Die Kupplungsnabe 2 weist radial abragende, sternförmige Befestigungsfortsätze 7 auf, die drehfest und axialfest mit der Kupplungsnabe 2 verbunden sind. Die radial nach außen abragenden Befestigungsfortsätze sind bei montierter Wellenkupplung 1 in einer gemeinsamen Radialebene zu dem Ringflansch 8 der zweiten Kupplungsseite 3 ausgerichtet.

Bei der Wellenkupplung 1 nach den Fig. 1 bis 3 weist die Kupplungsnabe 2 zwei identische, sternförmige Befestigungsringe auf, die die Befestigungsfortsätze 7 bilden. Die beiden Befestigungsringe sind in axialem Abstand auf der Kupplungsnabe 2 befestigt. In gleicher Weise weist die zweite Kupplungsseite 3 zwei zueinander axial beabstandete und zueinander parallele Ringflansche 8 auf, wobei jeweils ein Ringflansch 8 in einer gemeinsamen Radialebene mit dem zugehörigen Befestigungsring der Kupplungsnabe 2 positioniert ist. Der zweite Befestigungsring und der zweite Ringflansch sind aus Übersichtlichkeitsgründen in den Fig. 1 bis 3 nicht näher bezeichnet. Sie sind identisch ausgeführt wie der erste Befestigungsring mit den Befestigungsfortsätzen 7 und der erste Ringflansch 8 gemäß Fig. 2.

Wie anhand der Fig. 3 erkennbar ist, dienen zur Drehmomentübertragung zwischen der die erste Kupplungsseite bildenden Kupplungsnabe 2 und der zweiten Kupplungsseite 3 mehrere Elastomersegmente 4, die gemäß Fig. 3 jeweils axial paarweise angeordnet und in vier Paaren in Umfangsrichtung aneinandergereiht sind. Es sind somit 8 identische Elastomersegmente 4 vorgesehen, wobei jeweils zwei Elastomersegmente 4 paarweise aneinandergefügt sind. Bei einer nicht dargestellten Ausführungsform der Erfindung sind nicht jeweils zwei Elastomersegmente 4 paarweise parallel geschaltet, sondern es ist jeweils lediglich ein einzelnes Elastomersegment 4 im Bereich des Befestigungsfortsatzes 7 zur Drehmomentübertragung befestigt, so dass sich bei dieser nicht dargestellten Ausführungsform insgesamt vier Elastomersegmente 4 ergeben. Der Einfachheit halber wird nachfolgend jedes Paar von Elastomersegmenten 4 so beschrieben, als wäre lediglich ein einzelnes Elastomersegment am entsprechenden Umfangsabschnitt der Wellenkupplung 1 vorgesehen.

Jedes Elastomersegment 4 ist längserstreckt und weist eine zentrale Befestigungsanordnung mit zwei achsparallelen Durchtritten sowie zwei seitliche Befestigungsanordnungen mit ebenfalls zwei achsparallelen Durchtritten auf. Durch die Durchtritte sind Schraubverbindungen hindurchgeführt, die im Bereich der zentralen Befestigungsanordnung über die Befestigungsfortsätze 7 mit der Kupplungsnabe 2 und im Bereich der seitlichen Befestigungsanordnungen mit den Ringflanschen 8 der zweiten Kupplungsseite 3 verbunden werden. Die Schraubverbindung, die nicht näher bezeichnet sind, durchdringen die in einer Radialebene in Umfangsrichtung ausgerichteten Elastomersegmente axial vollständig, um die Befestigung an der Kupplungsnabe 2 einerseits und an den Ringflanschen 8 andererseits zu ermöglichen. Jedes Elastomersegment 4 weist einen zentralen Metallkörper 9 sowie zwei seitliche Metallkörper 10 auf. Der zentrale Metallkörper 9 ist mittig zwischen den beiden seitlichen Metallkörpern 10 angeordnet. Zwischen jedem seitlichen Metallkörper 10 und dem zentralen Metallkörper 9 erstreckt sich jeweils ein Elastomervollkörper 11, der massiv aus einem Elastomermaterial, insbesondere einem Natur- oder Synthetikkautschuk, hergestellt ist. Jeder der beiden Elastomervollkörper 11 ist an die benachbarten Metallkörper 9, 10 anvulkanisiert. Um eine große Oberfläche für eine Anvulkanisierung zu erzielen, ist jeder Metallkörper 9, 10 auf seiner dem benachbarten Metallkörper 9, 10 zugewandten Seitenfläche mit einer Auswölbung 13, 14 versehen, durch die die Seitenflächen mit einer Kuppe versehen sind. Der Elastomervollkörper 11 ist flächig mit seinen gegenüberliegenden Stirnflächen über die gesamte Höhe und Breite der jeweiligen, mit der Kuppe 13, 14 versehenen Seitenfläche der beiden Metallkörper 9, 10 durch Anvulkanisieren stoffschlüssig verbunden.

Jeder Elastomervollkörper 11 weist auf einer Oberseite, die in montiertem Zustand eine radiale Außenseite des Elastomersegementes 4 darstellt, eine höckerförmige Verdickung 12 auf. Die Verdickung 12, die auch als Höcker bezeichnet wird, ist einstückiger Teil des Elastomervollkörpers 11 und gemeinsam mit diesem ausgeformt. Jede Verdickung 12 befindet sich an einem im Kupplungsbetrieb besonders hoch belasteten Bereich des Elastomervollkörpers 11. Die Lage, Anordnung und Gestaltung der Verdickung 12 wird mittels einer Finite-Elemente-Methode ermittelt. Auch die übrige Form jedes Elastomervollkörpers 11 wird durch eine entsprechende Berechnung optimiert und auf die angefügten Metallkörper abgestimmt. Die Metallkörper 9, 10 bestehen aus Stahl und sind durch spanende Bearbeitung aus dem Vollen hergestellt. Bei einer nicht dargestellten Ausführungsform können die Metallkörper 9, 10 als Guss- oder Schmiedeteile gestaltet sein.

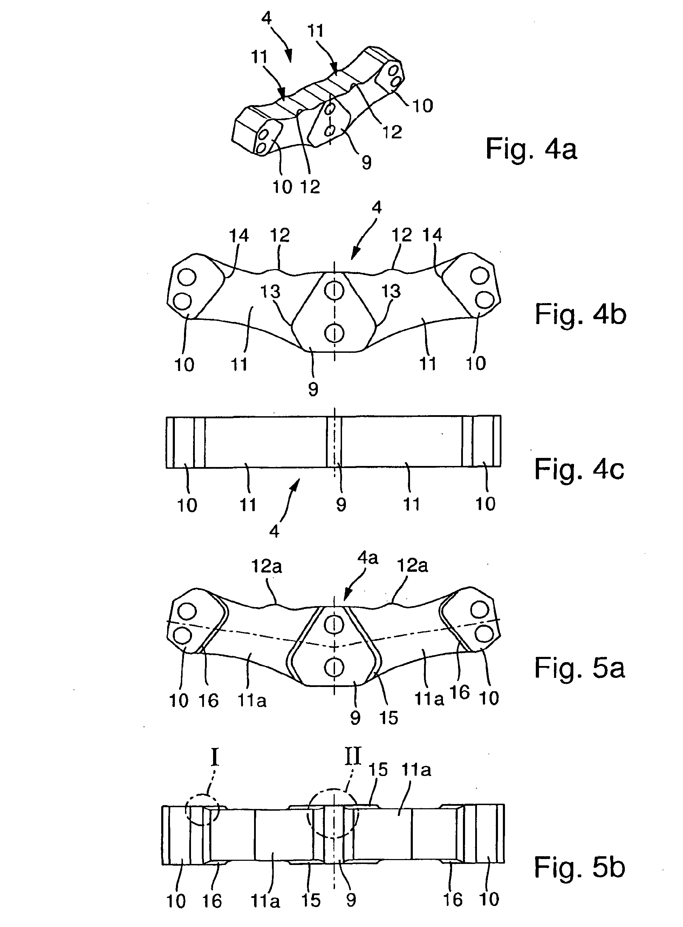

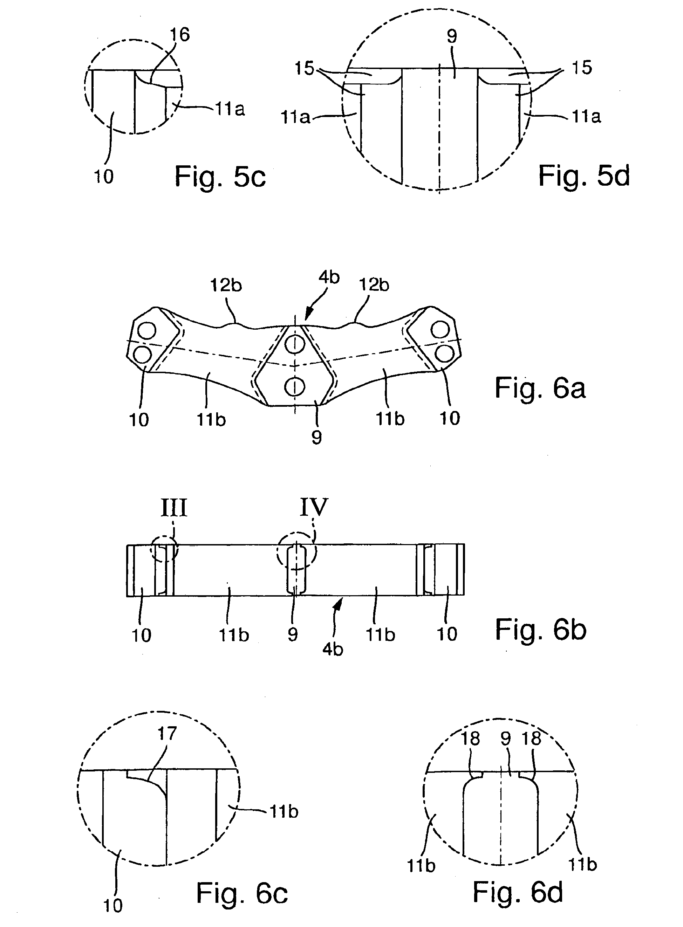

Die Elastomersegmente 4a, 4b nach den Fig. 5a bis 5d und 6a bis 6d entsprechen im Wesentlichen dem Elastomersegment 4 nach den Fig. 4a bis 4c. Sie sind in gleicher Weise bei einer Wellenkupplung nach den Fig. 1 bis 3 einsetzbar wie das Elastomersegment 4 nach den Fig. 4a bis 4c. Baugleiche Abschnitte oder Teile der Elastomersegmente 4a, 4b sind mit den gleichen Bezugszeichen versehen wie das Elastomersegment 4. Soweit Abschnitte oder Teile nicht identisch, sondern lediglich funktionsgleich sind, sind diese mit den gleichen Bezugszeichen, aber unter Hinzufügung des Buchstabens a bzw. b versehen. Zur Vermeidung von Wiederholungen wird daher ergänzend auf die Offenbarung der Ausführungsform nach den Fig. 1 bis 4c bezüglich der Ausführungsformen nach den Fig. 5a bis 6d verwiesen.

Die Metallkörper 9 und 10 sind bei beiden Elastomersegmenten 4a, 4b identisch gestaltet. Auch die Elastomervollkörper 11a, 11 b sind nahezu identisch ausgeführt wie die Elastomervollkörper 11 nach Fig. 4a bis 4c. Die Elastomervollkörper 11 a, 11 b weisen an ihrer Oberseite als Höcker dienende Verdickungen 12a, 12b auf, die die gleiche Funktion besitzen wie die Verdickungen 12 nach den Fig. 4a bis 4c.

Wesentlicher Unterschied bei den Ausführungsformen der Elastomersegmente 4a, 4b ist es, dass die Elastomervollkörper 11a, 11b zur Vermeidung von Kerbwirkungen an den Grenzflächen zu den anschließenden Metallkörpern 9, 10 mit Radien 15 bis 18 an den Randbereichen versehen sind. Bei der Ausführungsform nach den Fig. 5a bis 5d werden die Radien dadurch erzielt, dass die Dicke der Elastomervollkörper 11 a geringfügig geringer ist als die Dicke der Metallkörper 9, 10. An den Grenzflächen zu den Metallkörpern 9, 10 kann das Elastomermaterial bei einem Anvulkanisieren demzufolge mittels Radien nach außen gezogen werden, wie den Fig. 5c und 5d entnehmbar ist. Bei der Ausführungsform nach den Fig. 6a bis 6d sind die Randbereiche der Metallkörper 9, 10, die mit Fasen versehen sind, dazu vorgesehen, dass das Elastomermaterial auch diese Fasen noch umschließt und demzufolge über die entsprechenden Randbereiche der Metallkörper 9, 10 gezogen ist. Hierzu weisen die Elastomervollkörper 11 b exakt die gleiche Dicke auf wie die Metallkörper 9, 10, wie anhand der Fig. 6b bis 6d gut erkennbar ist. Kerbwirkungen bei auftretenden Zug-, Druck- und Schubbelastungen können durch diese Maßnahmen reduziert werden.

## Patentansprüche

1. Elastische Wellenkupplung zur Drehmomentübertragung mit einer relativ zu einer Kupplungsdrehachse radial innenseitigen Kupplungsnabe, die einer ersten Kupplungsseite zugeordnet ist, sowie mit einer radial außenliegenden zweiten Kupplungsseite (3), wobei die Kupplungsnabe (2) mit der zweiten Kupplungsseite (3) über mehrere Elastomersegmente (4, 4a, 4b) drehmomentübertragend verbunden ist, die jeweils über eine zentrale Befestigungsanordnung mit der Kupplungsnabe (2) und über zwei in Umfangsrichtung beabstandete, seitliche Befestigungsanordnungen mit der zweiten Kupplungsseite (3) verbunden sind, **dadurch gekennzeichnet, dass** jedes Elastomersegment (4, 4a, 4b) einen einzigen Strang bildet, einen zentralen Metallkörper (9) sowie zwei seitliche Metallkörper (10) aufweist, in denen die Befestigungsanordnungen integriert sind, und dass jeder seitliche Metallkörper (10) mit dem zentralen Metallkörper (9) über jeweils einen Elastomervollkörper (11, 11a, 11 b) verbunden ist, der an beiden Metallkörpern (9, 10) anvulkanisiert ist.

2. Elastische Wellenkupplung nach Anspruch 1, **dadurch gekennzeichnet, dass** jeder Elastomervollkörper (11, 11a, 11b) an seinem Außenumfang wenigstens einen einstückig angeformten Höcker (12, 12a, 12b) aufweist, der nach außen abragt.

3. Elastische Wellenkupplung nach Anspruch 1, **dadurch gekennzeichnet, dass** jeder Elastomervollkörper (11, 11a, 11 b) flächig über seine gesamte Stirnfläche an dem jeweiligen Metallkörper (9, 10) anvulkanisiert ist.

4. Elastische Wellenkupplung nach Anspruch 3, **dadurch gekennzeichnet, dass** jeder Metallkörper (9, 10) an wenigstens einer einem Elastomervollkörper (11, 11a, 11b) zugewandten Seitenfläche mit wenigstens einer Auswölbung (13, 14) versehen ist, die der Elastomervollkörper (11, 11 a, 11 b) umschließt.

5. Elastische Wellenkupplung nach Anspruch 3 oder 4, **dadurch gekennzeichnet, dass** Randbereiche jedes Elastomervollkörpers (11 a, 11 b) unter Bildung von Radien (15 bis 18) an dem entsprechenden Metallkörper (9, 10) anvulkanisiert sind.

6. Elastische Wellenkupplung nach Anspruch 1, **dadurch gekennzeichnet, dass** die Kupplungsnabe (2) radial nach außen abragende Befestigungsfortsätze (7) zur Verbindung mit den zentralen Metallkörpern (9) der Elastomersegmente (4, 4a, 4b) aufweist.

7. Elastische Wellenkupplung nach Anspruch 6, **dadurch gekennzeichnet, dass** die zweite Kupplungsseite (3) wenigstens einen radialen Ringflansch (8) aufweist, an dem die seitlichen Metallkörper (10) der Elastomersegmente (4, 4a, 4b) gelagert sind.

8. Elastische Wellenkupplung nach Anspruch 7, **dadurch gekennzeichnet, dass** ein Außendurchmesser der Kupplungsnabe (2) im Bereich der Befestigungsfortsätze (7) kleiner ist als ein Innendurchmesser des wenigstens einen Ringflansches (8) der zweiten Kupplungsseite (3).

9. Elastomersegment für eine elastische Wellenkupplung nach einem der vorhergehenden Ansprüche, das einen zentralen Metallkörper (9) sowie zwei seitliche Metallkörper (10) aufweist, in denen die Befestigungsanordnungen integriert sind, wobei jeder seitliche Metallkörper (10) mit dem zentralen Metallkörper (9) über jeweils einen Elastomervollkörper (11, 11a, 11 b) verbunden ist, der an dem seitlichen Metallkörper (10) und dem zentralen Metallkörper (9) anvulkanisiert ist, und einen einzigen Strang bildet.

## Claims

1. Elastic shaft coupling for torque transmission, comprising, in relation to an axis of rotation of the coupling, a radially inner coupling hub, which is associated with a first coupling side, and a radially outer second coupling side (3), wherein the coupling hub (2) is connected in a torque-transmitting manner to the second coupling side (3) by way of a number of elastomer segments (4, 4a, 4b), which are respectively connected by way of a central fastening arrangement to the coupling hub (2) and by way of two lateral fastening arrangements spaced apart in the circumferential direction to the second coupling side (3), **characterized in that** each elastomer segment (4, 4a, 4b) forms a single strand and has a central metal body (9) and two lateral metal bodies (10), in which the fastening arrangements are integrated, and **in that** each lateral metal body (10) is respectively connected to the central metal body (9) by way of a solid elastomer body (11, 11a, 11b), which is vulcanized onto both metal bodies (9, 10).

2. Elastic shaft coupling according to Claim 1, **characterized in that** each solid elastomer body (11, 11a, 11b) has on its outer circumference at least one integrally formed bump (12, 12a, 12b), which protrudes outwards.

3. Elastic shaft coupling according to Claim 1, **characterized in that** each solid elastomer body (11, 11a, 11b) is vulcanized onto the respective metal body (9, 10) over the entire surface area of its end face.

4. Elastic shaft coupling according to Claim 3, **characterized in that** each metal body (9, 10) is provided on at least one side face that is facing a solid elastomer body (11, 11a, 11b) with at least one convexity (13, 14), which the solid elastomer body (11, 11a, 11b) encloses.

5. Elastic shaft coupling according to Claim 3 or 4, **characterized in that** peripheral regions of each solid elastomer body (11a, 11b) are vulcanized onto the corresponding metal body (9, 10) while forming radii (15 to 18).

6. Elastic shaft coupling according to Claim 1, **characterized in that** the coupling hub (2) has radially outwardly protruding fastening projections (7) for connection to the central metal bodies (9) of the elastomer segments (4, 4a, 4b).

7. Elastic shaft coupling according to Claim 6, **characterized in that** the second coupling side (3) has at least one radial annular flange (8), on which the lateral metal bodies (10) of the elastomer segments (4, 4a, 4b) are mounted.

8. Elastic shaft coupling according to Claim 7, **characterized in that** an outside diameter of the coupling hub (2) in the region of the fastening projections (7) is smaller than an inside diameter of the at least one annular flange (8) of the second coupling side (3).

9. Elastomer segment for an elastic shaft coupling according to one of the preceding claims, which has a central metal body (9) and two lateral metal bodies (10), in which the fasting arrangements are integrated, each lateral metal body (10) being respectively connected to the central metal body (9) by way of a solid elastomer body (11, 11a, 11b), which is vulcanized onto the lateral metal body (10) and the central metal body (9), and forms a single strand.

## Revendications

1. Embrayage élastique pour arbre pour le transfert de couple, comprenant un moyeu d'embrayage radialement interne par rapport à un axe de rotation de l'embrayage, qui est associé à un premier côté d'embrayage, ainsi qu'un deuxième côté d'embrayage (3) situé radialement à l'extérieur, le moyeu d'embrayage (2) étant connecté par transmission de couple au deuxième côté d'embrayage (3) par le biais de plusieurs segments élastomères (4, 4a, 4b), lesquels segments élastomères sont connectés à chaque fois par le biais d'un agencement de fixation central au moyeu d'embrayage (2) et par le biais de deux agencements de fixation latéraux, espacés dans la direction périphérique, au deuxième côté d'embrayage (3), **caractérisé en ce que** chaque segment élastomère (4, 4a, 4b) forme un tronçon unique et présente un corps métallique central (9) ainsi que deux corps métalliques latéraux (10), dans lesquels sont intégrés les agencements de fixation, et **en ce que** chaque corps métallique latéral (10) est connecté au corps métallique central (9) par le biais d'un corps massif élastomère respectif (11, 11a, 11b), qui est vulcanisé sur les deux corps métalliques (9, 10).

2. Embrayage élastique pour arbre selon la revendication 1, **caractérisé en ce que** chaque corps massif élastomère (11, 11a, 11b) présente sur sa périphérie extérieure au moins une protubérance formée d'une seule pièce (12, 12a, 12b) qui fait saillie vers l'extérieur.

3. Embrayage élastique pour arbre selon la revendication 1, **caractérisé en ce que** chaque corps massif élastomère (11, 11a, 11b) est vulcanisé à plat sur toute sa surface frontale sur le corps métallique respectif (9, 10).

4. Embrayage élastique pour arbre selon la revendication 3, **caractérisé en ce que** chaque corps métallique (9, 10) est pourvu au niveau d'au moins une surface latérale tournée vers un corps massif élastomère (11, 11a, 11b) d'au moins une partie bombée (13, 14) qui entoure le corps massif élastomère (11, 11a, 11b).

5. Embrayage élastique pour arbre selon la revendication 3 ou 4, **caractérisé en ce que** des régions de bord de chaque corps massif élastomère (11a, 11b) sont vulcanisées sur le corps métallique correspondant (9, 10) en formant des rayons (15 à 18).

6. Embrayage élastique pour arbre selon la revendication 1, **caractérisé en ce que** le moyeu d'embrayage (2) présente des saillies de fixation (7) faisant saillie radialement vers l'extérieur pour la connexion aux corps métalliques centraux (9) des segments élastomères (4, 4a, 4b).

7. Embrayage élastique pour arbre selon la revendication 6, **caractérisé en ce que** le deuxième côté d'embrayage (3) présente au moins une bride annulaire radiale (8) sur laquelle sont supportés les corps métalliques latéraux (10) des segments élastomères (4, 4a, 4b).

8. Embrayage élastique pour arbre selon la revendication 7, **caractérisé en ce qu'**un diamètre extérieur du moyeu d'embrayage (2) dans la région des saillies de fixation (7) est inférieur à un diamètre intérieur de l'au moins une bride annulaire (8) du deuxième côté d'embrayage (3).

9. Segment élastomère pour un embrayage élastique pour arbre selon l'une quelconque des revendications précédentes, qui présente un corps métallique central (9) ainsi que deux corps métalliques latéraux (10), dans lesquels sont intégrés les agencements de fixation, chaque corps métallique latéral (10) étant connecté au corps métallique central (9) par le biais d'un corps massif élastomère respectif (11, 11a, 11b) qui est vulcanisé sur le corps métallique latéral (10) et le corps métallique central (9), et qui forme un tronçon unique.
